# EUROPÄISCHE PATENTSCHRIFT

(11) **EP 2 923 555 B1**
(45) Veröffentlichungstag und Bekanntmachung des Hinweises auf die Patenterteilung: **06.09.2017**
(21) Anmeldenummer: 14198438.5
(22) Anmeldetag: 17.12.2014
(51) Int. Cl.: A01D 41/12

(54) **Erweiterungsvorrichtung für einen schüttgutbehälter**
Extension device for a bulk material container
Dispositif d'agrandissement pour un réservoir de matières en vrac

(30) Priorität: 28.03.2014 DE 102014004481
(43) Veröffentlichungstag der Anmeldung: 30.09.2015
(73) Patentinhaber: CLAAS Selbstfahrende Erntemaschinen GmbH, 33428 Harsewinkel (DE)
(72) Erfinder: Claes, Ulrich, 33790 DHalle/Westfalen (DE); Röwekamp, Thomas, 49134 Wallenhorst (DE)

(56) Entgegenhaltungen:
- EP-A2- 1 564 157
- DE-A1- 10 051 096
- US-A1- 2003 078 085
- US-A1- 2004 033 823
- US-A1- 2013 252 681

## Beschreibung

Die vorliegende Erfindung betrifft eine Erweiterungsvorrichtung zur Erweiterung des Fassungsvermögens eines Schüttgutbehälters. Insbesondere betrifft sie eine Erweiterungsvorrichtung für den Korntank eines Mähdreschers.

Aus EP 1 564 157 A2 ist eine solche Erweiterungsvorrichtung bekannt, bei der an einen durch den Korntank des Mähdreschers selbst gebildeten Rahmen mehrere Wandplatten angelenkt und aus einer auf dem Rahmen flach aufliegenden, den Korntank verschließenden Stellung in eine über den Rahmen aufragende Stellung ausschwenkbar sind. Dreieckige Verbindungsplatten füllen die Lücken zwischen den in der ausgeschwenkten Stellung nach oben auseinanderlaufenden Wandplatten, so dass ein ringsum geschlossener Behälter gebildet wird.

Das Fassungsvermögen dieser herkömmlichen Erweiterungsvorrichtung ist eingeschränkt durch die Notwendigkeit, die Breite der Wandplatten quer zu ihrer Schwenkachse so klein zu wählen, dass zwei einander gegenüberliegende Wandplatten in der geschlossenen Stellung über die Öffnung des Rahmens geklappt werden können, ohne miteinander zu überlappen. Wäre die Breite größer, dann würde ein Versuch, die Wandplatten über die Rahmenöffnung zu klappen, durch Zusammenstoß der Wand- und Verbindungsplatten blockiert.

In DE 10 2007 003 653 A1 wurde eine Erweiterungsvorrichtung für einen Schüttgutbehälter vorgestellt, bei der das Fassungsvermögen durch Verwendung von aus jeweils zwei miteinander schwenkbar verbundenen Segmenten gebildeten Wandplatten vergrößert ist. Ein inneres Segment der Wandplatten, das jeweils ein äußeres Segment mit dem Rahmen verbindet, nimmt in ausgeschwenkter Stellung eine im Wesentlichen horizontale Orientierung ein. Dadurch können zwar die Abmessungen der Erweiterungsvorrichtung in der Horizontalen deutlich vergrößert werden, doch entstehen Bereiche, aus denen Schüttgut beim Entleeren der Vorrichtung nicht mehr ohne weiteres zum Rahmen hin abfließen kann, so dass zum vollständigen Entleeren der Erweiterungsvorrichtung Hilfsmittel wie etwa eine Fluidisierungseinrichtung benötigt werden oder Bewegungen der Segmente in eine Stellung gesteuert werden müssen, in der das Schüttgut vollständig abfließt.

Die Druckschrift US 2004/0033823 A1 offenbart eine Erweiterung eines Schüttgutbehälters eines Mähdreschers. Die Erweiterung umfasst Wandplatten, die an einem oberen Ende des Schüttgutbehälters angeordnet sind und ein höheres Befüllen des Schüttgutbehälters ermöglichen. Eine aus einer Plane gebildete Abdeckung ist an die Erweiterung angebracht.

Aufgabe der vorliegenden Erfindung ist, eine Erweiterungsvorrichtung für einen Schüttgutbehälter zu schaffen, der ein großes Fassungsvermögen erreicht, ohne dass sich dadurch seine Entleerung verkompliziert.

Dafür wird eine Erweiterungsvorrichtung für einen Schüttgutbehälter geschaffen, die einen Rahmen, eine Mehrzahl von an dem Rahmen angelenkten, ausschwenkbaren und in einer ausgeschwenkten Stellung einen Innenraum der Erweiterungsvorrichtung begrenzenden Wandplatten, Verbindungselemente, die jeweils an zwei ihrer Ränder an benachbarte Wandplatten angelenkt sind, und erste Erweiterungselemente umfasst, die an eine obere Kante der Wandplatten angelenkt und zwischen einer an den Wandplatten anliegenden und einer die Wandplatten verlängernden Stellung schwenkbar sind. Bei der Erweiterungsvorrichtung sind in der die Wandplatten verlängernden Stellung flexible Membranelemente zwischen den ersten Erweiterungselementen gespannt. Die Erweiterungselemente und die sie verbindenden Membranelemente erlauben es, in der ausgeschwenkten Stellung den Schüttgutbehälter nach oben hin zu erweitern, ohne dessen Abmessungen in der Horizontalen zu vergrößern. So kann die Entstehung von nicht mehr ohne Hilfsmittel entleerbaren Bereichen in der Erweiterungsvorrichtung vermieden werden. Die flexiblen Membranelemente behindern das Schwenken der Erweiterungselemente nicht und bilden dennoch bei Erreichen des gespannten Zustandes eine den Innenraum sicher begrenzende und belastbare Wandung.

Die Erweiterungsvorrichtung zeichnet sich weiter dadurch aus, dass die Membranelemente durch jeweils wenigstens ein Zugelement dehnfest verstärkt sind. Insbesondere kann ein solches Zugelement sich entlang einer oberen Kante des Membranelements erstrecken. Dabei kann das Zugelement insbesondere als ein flacher Gurt, ein Flachband oder ein Seil ausgeführt sein.

Enden des Zugelementes sind vorzugsweise an benachbarten Erweiterungselementen befestigt. Ein solches Zugelement kann insbesondere von einem Membranzuschnitt des Membranelements umschlungen sein.

Vorzugsweise kann sich das flexible Membranelement ausgehend von den ersten Erweiterungselementen anstelle der Verbindungselemente zwischen die Wandplatten erstrecken.

Zweckmäßigerweise sind ferner zweite Erweiterungselemente an eine obere Kante der Verbindungselemente angelenkt und mit einem jeweils benachbarten ersten Erweiterungselement über eines der flexiblen Membranelemente verbunden.

Die zweiten Erweiterungselemente können durch Federn in eine an den Verbindungselementen anliegende Stellung beaufschlagt sein. Um sie in der ausgeschwenkten Stellung der Erweiterungsvorrichtung von den Verbindungselementen fort zu schwenken, genügt über die Membranelemente von den ersten Erweiterungselementen auf sie ausgeübter Zug.

Jedem ersten Erweiterungselementen ist zweckmäßigerweise ein Stellglied zugeordnet, das an dem ersten Erweiterungselement angreift, um eine Schwenkbewegung des ersten Erweiterungselements aus der an der es tragenden Wandplatte anliegenden Stellung in die die Wandplatte verlängernde Stellung anzutreiben. Ein solches Stellglied muss nicht notwendigerweise auch eine Antriebskraft in entgegengesetzter Richtung erzeugen können; es kann genügen, dass die an den zweiten Erweiterungselementen angreifenden Federn benachbarte erste Erweiterungselemente mitziehen, wenn diese in der die Wandplatte verlängernden Stellung nicht mehr festgehalten sind.

Ein solches Stellglied ist vorzugsweise an der das betreffende erste Erweiterungselement tragenden Wandplatte montiert und zusammen mit dieser beweglich.

Ein solches Stellglied kann insbesondere an einer dem Innenraum zugewandten Innenseite der Wandplatte jenseits eines die Wandplatte mit einem Verbindungselement verbindenden Gelenks, d. h. in einem außerhalb des eigentlichen Innenraums liegenden und mit dem Schüttgut nicht in Kontakt kommenden Bereich der Innenseite, angeordnet sein. Eine solche Anordnung ist insbesondere an denjenigen Wandplatten sinnvoll, die in einer über den Rahmen geklappten geschlossenen Stellung der Erweiterungsvorrichtung zuoberst zu liegen kommen.

Das Stellglied kann auch an einer Außenseite der Wandplatte, vorzugsweise mittig, angeordnet sein. Eine solche mittige Anordnung ist insbesondere dann platzsparend, wenn das Stellglied an einer Wandplatte montiert ist, die in der geschlossenen Stellung der Erweiterungsvorrichtung zuunterst zu liegen kommt und bei der dann das Stellglied zwischen den einander zugewandten Rändern der zuoberst liegenden Wandplatten Platz findet.

Die Membranelemente können mit den benachbarten Erweiterungselementen jeweils durch Stangenscharniere verbunden sein. Dies ist insbesondere dann zweckmäßig, wenn ein Membranzuschnitt des betreffenden Elements aus einem mäßig flexiblen Material besteht, das durch häufiges und scharfes Knicken ermüden kann. Wenn das Material des Membranelements flexibel genug ist, kann ein solches Membranelement an einem benachbarten Erweiterungselement auch flächig anliegend befestigt sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Mähdrescher, dessen Korntank durch eine erfindungsgemäße Vorrichtung erweitert ist, in Seitenansicht;
- Fig. 2: eine Ansicht der Erweiterungsvorrichtung von vorn;
- Fig. 3: eine perspektivische Ansicht der Erweiterungsvorrichtung in ausgeschwenkter Stellung;
- Fig. 4: ein Stellglied zum Antreiben einer Schwenkbewegung der Erweiterungselemente der Erweiterungsvorrichtung;
- Fig. 5: die Erweiterungsvorrichtung in teilweise ausgeschwenkter Stellung;
- Fig. 6: die Erweiterungsvorrichtung in geschlossener Stellung;

- Fig. 7: einen Schnitt durch eine Wandplatte und ein an der Wandplatte befestigtes Membranelement gemäß einer ersten Ausgestaltung;
- Fig. 8: einen Schnitt durch eine Wandplatte und ein Membranelement gemäß einer zweiten Ausgestaltung;
- Fig. 9: eine teils perspektivische, teils geschnittene Ansicht eines Membranelements; und
- Fig. 10: eine Ansicht der Erweiterungsvorrichtung gemäß einer dritten Ausgestaltung von vorn.

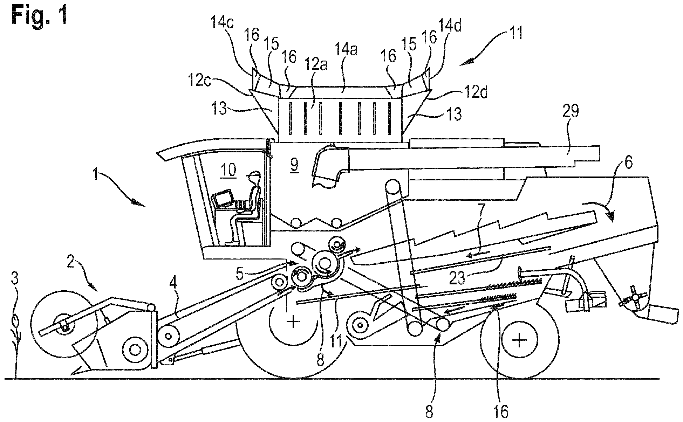

In Fig. 1 ist ein erfindungsgemäßer Mähdrescher 1 teils in Seitenansicht, teils in einem schematischen Längsschnitt dargestellt. Von einem Schneidwerk 2 des Mähdreschers 1 aufgenommenes Erntegut 3 gelangt über einen Schrägförderer 4 zu einem Dreschwerk 5. Ein Strom 6 von ausgedroschenen Halmen wird am Heck des Mähdreschers 1 ausgeschieden, während ein Korn-Spreu-Gemisch 7 einer Reinigungseinrichtung 8 zugeführt und aus dem Gemisch 7 abgeschiedenes Korn in einen Korntank 9 unmittelbar hinter einer Fahrerkabine 10 des Mähdreschers 1 gefördert wird.

Eine Erweiterungsvorrichtung 11 für den Korntank 9 ist auf der Decke der Karosserie des Mähdreschers 1 montiert und durch eine Öffnung in der Decke mit dem Korntank 9 verbunden. An einem die Öffnung umgebenden Rahmen sind vier Wandplatten 12a bis 12d schwenkbar befestigt. In der in Fig. 1 gezeigten ausgeschwenkten Stellung der Wandplatten 12 laufen diese jeweils nach oben auseinander, so dass sie einen umgekehrt pyramidenstumpfförmigen, sich nach oben erweiternden Innenraum der Erweiterungsvorrichtung 11 begrenzen. Die Neigung der Wandplatten 12a-d gegen die Horizontale beträgt wenigstens 23°, um sicherzustellen, dass beim Entleeren des Korntanks 9 der Inhalt der Erweiterungsvorrichtung 11 vollständig in den Korntank 9 nachrutscht, ohne dass durch Schwenken der Wandplatten, Rütteln oder dergleichen nachgeholfen werden muss.

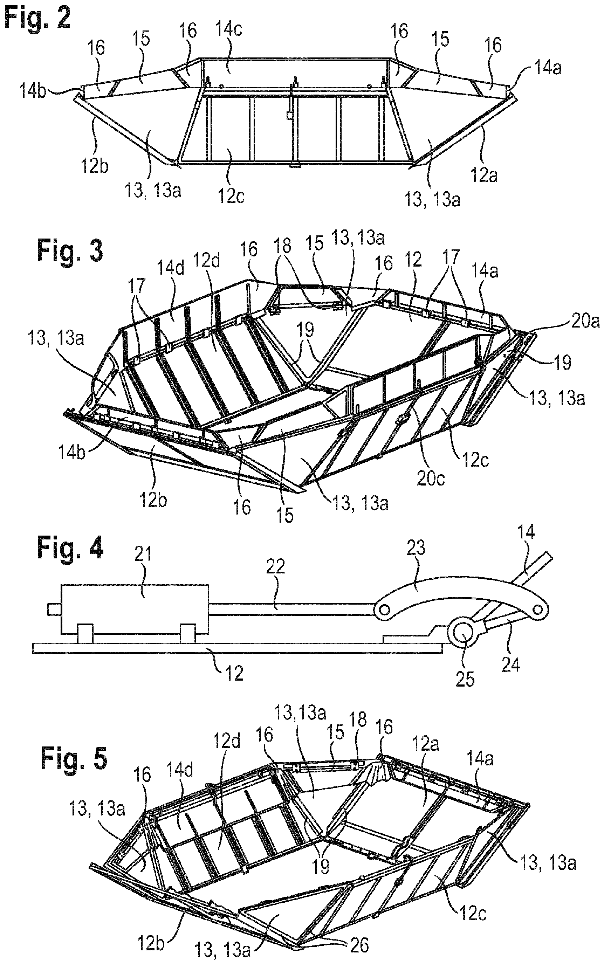

Die seitlichen Wandplatten 12a, 12b, sind rechteckig, wie anhand der Wandplatte 12a in Fig. 1 gezeigt; vordere und hintere Wandplatten 12c, 12d haben, wie in Fig. 2 zu erkennen, die Form von nach oben schmaler werdenden Trapezen. Die Wandplatten 12a bis 12d sind an einander benachbarten seitlichen Kanten durch Verbindungselemente 13 miteinander verbunden. Die Verbindungselemente 13 können als im Wesentlichen dreieckförmige, starre Verbindungsplatten 13a ausgeführt sein, die die Wandplatten 12a bis 12d gelenkig miteinander verbunden. Die Verbindungselemente 13 können alternativ aus einem flexiblen Material bestehen, welches das Zusammenfalten und/oder Stauchen der Verbindungselemente 13 bei einem Zusammenklappen der Erweiterungsvorrichtung 11 ermöglicht. Vorzugsweise bestehen die Verbindungselemente 13 aus einem flexiblem Flachmaterial wie etwa einer zähen Kunststofffolie oder einem Gewebe, zweckmäßigerweise aus einem Gewebe-Kunststoff-Laminat in Art einer LKW-Plane.

An jede Wandplatte 12a bis 12d ist entlang ihrer oberen Kante ein erstes Erweiterungselement 14a bis 14d angelenkt. In der in Fig. 1 und 2 gezeigten ausgeschwenkten Stellung der Erweiterungsvorrichtung 11 sind die Erweiterungselemente 14a bis 14d vertikal orientiert. Wie die Wandplatten 12a bis 12d sind die ersten Erweiterungselemente 14a-d aus einem biegefesten Flachmaterial, typischerweise Stahlblech, gefertigt.

In der hier gezeigten Ausgestaltung der Erweiterungsvorrichtung 11 sind plattenförmige, biegefeste zweite Erweiterungselemente 15 auch an die oberen Kanten der Verbindungsplatten 13 angelenkt, und Zwischenräume zwischen den ersten Erweiterungselementen 14a bis 14d und den zweiten Erweiterungselementen 15 sind jeweils durch flexible Membranelemente 16 ausgefüllt, so dass die ersten und zweiten Erweiterungselemente 14a bis 14d und 15 und die Membranelemente 16 einen ringsum geschlossenen, den Innenraum der Erweiterungsvorrichtung 11 nach oben verlängernden Ring bilden.

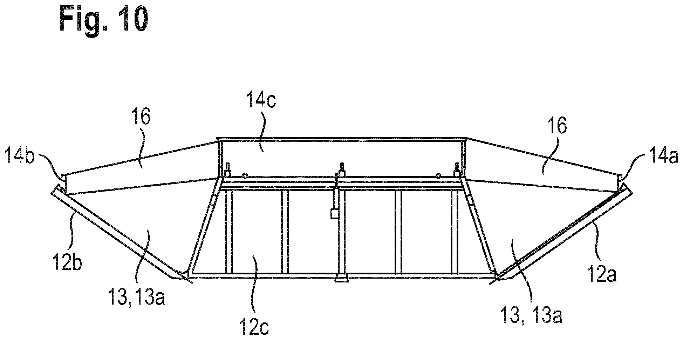

In einer vereinfachten Ausgestaltung könnten die zweiten Erweiterungselemente 15 auch fehlen und die ersten Erweiterungselemente 14a bis 14d untereinander unmittelbar durch die flexiblen Membranelemente 16 verbunden sein. Dieses ist in Fig. 10, welche eine Ansicht der Erweiterungsvorrichtung gemäß einer dritten Ausgestaltung von vorn zeigt, dargestellt. Wie der Darstellung in Fig. 10 zu entnehmen ist, schließt sich das jeweilige Membranelement 16 mit seinem unteren Rand an das jeweilige Verbindungselement 13 zwischen den Wandplatten 12a bis 12d an. Die seitlichen Ränder des jeweiligen Membranelementes 16 sind mit den jeweiligen ersten Erweiterungselementen 14a bis 14d verbunden. Im Übrigen unterscheidet sich der Aufbau der Erweiterungsvorrichtung 11 nicht von den anderen nachstehend beschriebenen Ausgestaltungen.

Eine nicht dargestellte, vereinfachte Ausführung sieht vor, dass anstelle der zweiten Erweiterungselemente 15 die aus flexiblem Material bestehenden Verbindungselemente 13 sowohl einander benachbarte Wandplatten 12a bis 12d als auch einander benachbarte erste Erweiterungselemente 14a bis 14d miteinander verbinden.

Die Oberkanten der ersten Erweiterungselemente 14 sowie der zweiten Erweiterungselemente 15 und der Membranelemente 16 beschreiben in der Seitenansicht der Fig. 1 eine nach unten durchhängende Kurve, in der Vorderansicht der Fig. 2 ist die Kurve nach oben gewölbt. Der Grund dafür ist, dass die Breite der Erweiterungsvorrichtung 11 in der ausgeschwenkten Stellung größer ist als ihre Länge, und dass die vorn und hinten hochgezogenen Oberkanten der ersten und zweiten Erweiterungselemente 14, 15 es erlauben, in der Erweiterungsvorrichtung 11 einen Schüttkegel zu bilden, dessen Spitze noch über die Oberkanten der ersten und zweiten Erweiterungselemente 14, 15 aufragt und dessen Flanken die ersten und zweiten Erweiterungselemente 14, 15 jeweils knapp unter deren Oberkante erreichen.

Fig. 3 zeigt die Erweiterungsvorrichtung 11 in einer perspektivischen Ansicht. An den Oberkanten der Wandplatten 12a, 12d und der zwischen ihnen liegenden Verbindungsplatte 13a sind Scharniere 17, 18 zu erkennen, durch die die Wandplatten 12a, 12d sowie die Verbindungsplatten 13a mit ihren jeweiligen ersten Erweiterungselementen 14a, 14d bzw. zweiten Erweiterungselementen 15 gelenkig verbunden sind. Die Scharniere 18 an der Verbindungsplatte 13a sind federbeaufschlagt, um das zweite Erweiterungselement 15 in eine an der Innenseite der Verbindungsplatte 13a flach anliegende Stellung zu treiben. Das zweite Erweiterungselement 15 ist trapezförmig und nach oben verjüngt, so dass es in der anliegenden Stellung auf dem zweiten Erweiterungselement 15 Platz finden kann, ohne über die dessen seitliche Kanten bildenden Stangenscharniere 19 überzustehen, und folglich die anliegende Stellung erreichen kann, ohne an die benachbarten Wandplatten 12a, 12d anzustoßen. In der gezeigten ausgeschwenkten Stellung ist das zweite Erweiterungselement 15 am Erreichen dieser anliegenden Stellung gehindert durch die zwischen ihm und den benachbarten ersten Erweiterungselementen 14a, 14d straff gespannten Membranelemente 16.

Die ersten Erweiterungselemente 14a bis 14d sind in ihrer aufrechten Stellung durch Stellglieder 20a bis 20d gehalten. Von diesen Stellgliedern sind in Fig. 3 nur die Stellglieder 20a an der Wandplatte 12a und an der Wandplatte 12c zu sehen; die in der Fig. 3 nicht sichtbaren Stellglieder 20b, 20d sind an ihren Wandplatten 12b, 12d jeweils spiegelbildlich zu den gezeigten Stellgliedern 20a, 20c angeordnet. Das Stellglied 20a befindet sich an einer Innenseite der Wandplatte 12a jenseits der an die Wandplatten 12a, 12c angelenkten Verbindungsplatte 13a, so dass es nicht mit in der Erweiterungsvorrichtung 11 aufgenommenen Korn in Kontakt kommen und von diesem in seiner Funktion beeinträchtigt werden kann. Das Stellglied 20c ist an der Außenseite der Wandplatte 12c mittig angeordnet.

Der Aufbau der Stellglieder 20a bis 20d ist identisch und in Fig. 4 schematisch dargestellt. An der das Stellglied tragenden Wandplatte, in Fig. 4 allgemein mit 12 bezeichnet, ist ein Elektromotor 21 montiert, dessen Läufer ein Innengewinde aufweist, das mit einer Gewindestange 22 kämmt, so dass eine Drehung des Läufers eine Translation der Gewindestange 22 antreibt. Ein Lenker 23 ist mit der Gewindestange 22 und mit einem Hebelarm 24 schwenkbar verbunden. Der Hebelarm 24 koppelt an eine Welle 25, die ein Erweiterungselement 14 trägt. Wenn die Gewindestange 22 vom Elektromotor 21 zu einer Translation nach links angetrieben wird, schwenkt das erste Erweiterungselement 14 im Gegenuhrzeigersinn, bis es an der Wandplatte 12 anliegt. Durch eine Drehung des Motors in Gegenrichtung wird es wieder ausgeschwenkt, wobei über die Membranelemente 16 die jeweils benachbarten zweiten Erweiterungselemente 15 entgegen der Kraft der Federn in den Scharnieren 18 mitgezogen werden.

Fig. 5 zeigt die Erweiterungsvorrichtung 11 in einer teilausgeschwenkten Stellung, in der die Wandplatten 12a bis 12d und Verbindungsplatten 13b die gleichen Positionen einnehmen wie in Fig. 3, die ersten Erweiterungselemente 14a bis 14d und die zweiten Erweiterungselemente 15 aber gegen ihre jeweiligen Wandplatten 12a bis 12d und Verbindungsplatten 13a geschwenkt sind. Die Membranelemente 16 stehen nun nicht mehr unter Spannung und können in Falten gelegt sein.

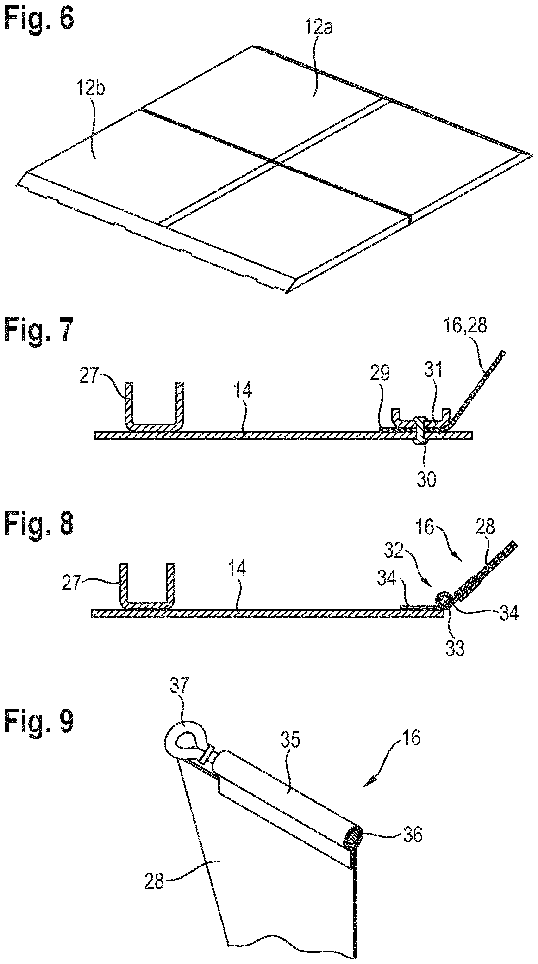

Um die Erweiterungsvorrichtung 11 in die geschlossene Stellung einzuklappen, etwa um die Höhe des Mähdreschers 1 für das Fahren auf öffentlichen Straßen zu reduzieren, werden ausgehend von der Konfiguration der Fig. 5 zunächst die beiden trapezförmigen Wandplatten 12c, 12d gegeneinander geklappt, wobei die Wand- und Verbindungsplatten entlang der sie an ihren seitlichen Kanten verbindenden Stangenscharniere 19 gegeneinander schwenken. Die Wandplatten 12a, 12b werden dabei zunächst nach außen geschwenkt; nachdem die Wandplatten 12c, 12d eine Vertikalstellung durchlaufen haben, folgen die Wandplatten 12a, 12b der Einwärtsbewegung der Wandplatten 12c, 12d, bis die in Fig. 6 gezeigte Konfiguration erreicht ist. Die trapezförmigen Wandplatten 12c, 12d sind unter den rechteckigen Wandplatten 12a, 12b vollständig verschwunden, die Stellglieder 20a, 20b befinden sich in einer geschützten Stellung unterhalb der Wandplatten 12a, 12d, und die Stellglieder 20c, 20d finden Platz in einer Fuge 26 zwischen den einander gegenüberliegenden oberen Kanten der Wandplatten 12a, 12b.

Fig. 7 zeigt ein erstes Beispiel einer Verbindung zwischen einem Erweiterungselement, hier einem der jeweils durch U-Profile 27 versteiften Erweiterungselemente 14, und einem Membranelement 16. Das Membranelement 16 umfasst einen Membranzuschnitt 28 aus flexiblem Flachmaterial wie etwa einer zähen Kunststofffolie oder einem Gewebe, zweckmäßigerweise aus einem Gewebe-Kunststoff-Laminat in Art einer LKW-Plane. Ein Rand 29 des Zuschnitts 28 ist an der Kante des Erweiterungselements 14 mithilfe von Klebstoff, Schrauben oder Nieten 30 flächig anliegend befestigt, vorzugsweise durch großflächige Klemmung zwischen dem ersten Erweiterungselement 14 und einem durch die Schrauben oder Nieten 30 daran fixierten Profil 31.

Wenn es zum Erreichen der notwendigen mechanischen Belastbarkeit des Membranelements 16 notwendig ist, einen Zuschnitt aus kräftigerem aber weniger leicht biegsamem Flachmaterial zu verwenden, der durch wiederholtes Biegen entlang der Kante des Profils 31 Schaden nehmen könnte, kann die Anbindung der Membranelemente 16 an die ersten Erweiterungselemente 14 und die zweiten Erweiterungselemente 15 auch über ein Scharnier, insbesondere, wie in Fig. 8 gezeigt, ein Stangenscharnier 32, erfolgen, von dessen zwei durch einen Scharnierstift 33 zusammengehaltenen Gewerben 34 eines an dem ersten Erweiterungselement 14 und das andere am Membranzuschnitt 28 befestigt ist. Im in Fig. 8 gezeigten Fall ist das Gewerbe 34 auf Seiten des Membranelements 16 zwischen zwei Lagen des Membranzuschnitts 28 eingebettet und am Membranzuschnitt 28 durch Kleben, Nähen, Nieten oder dergleichen befestigt.

Um in der ausgeschwenkten Stellung die notwendige Zugbelastbarkeit und Zugfestigkeit der Membranelemente 16 zu gewährleisten, ist es wünschenswert, wenn die Membranelemente 16 zumindest entlang ihrer Oberkante durch ein Zugmittel, wie ein flacher Gurt, ein Flachband oder ein Seil verstärkt sind. Fig. 9 zeigt eine perspektivische Ansicht einer Ecke eines solchen Membranelements 16, bei dem der Membranzuschnitt 28 entlang einer oberen Kante 35 des Membranelements 16 um ein Stahlseil 36 herumgeschlagen ist. Das Stahlseil 36 steht an seinen beiden Enden über den Membranzuschnitt 28 seitlich über, um eine Befestigung des Stahlseils 36 an einem benachbarten ersten Erweiterungselement 14 oder zweiten Erweiterungselement 15 zu ermöglichen. Im hier gezeigten Fall ist das Ende des Stahlseils 36 zu einer Öse 37 geformt, die am benachbarten ersten Erweiterungselement 14 oder zweiten Erweiterungselement 15 verschraubt oder vernietet oder, bei Verwendung eines Stangenscharniers 32 wie in Fig. 8 gezeigt, auf eine über die Gewerbe 34 überstehende Spitze des Scharnierstifts 33 aufgezogen sein kann.

### Bezugszeichen

- 1: Mähdrescher
- 2: Schneidwerk
- 3: Erntegut
- 4: Schrägförderer
- 5: Dreschwerk
- 6: Strom
- 7: Korn-Spreu-Gemisch
- 8: Reinigungseinrichtung
- 9: Korntank
- 10: Fahrerkabine
- 11: Erweiterungsvorrichtung
- 12: Wandplatte
- 13: Verbindungselement
13a Verbindungsplatte
- 14: erstes Erweiterungselement
- 15: zweites Erweiterungselement
- 16: Membranelement
- 17: Scharnier
- 18: Scharnier
- 19: Stangenscharnier
- 20: Stellglied
- 21: Elektromotor
- 22: Gewindestange
- 23: Lenker
- 24: Hebelarm
- 25: Welle
- 26: Fuge
- 27: U-Profil
- 28: Membranzuschnitt
- 29: Rand
- 30: Niet
- 31: Profil
- 32: Stangenscharnier
- 33: Scharnierstift
- 34: Gewerbe
- 35: obere Kante
- 36: Stahlseil
- 37: Öse

## Patentansprüche

1. Erweiterungsvorrichtung für einen Schüttgutbehälter, mit einem Rahmen, einer Mehrzahl von an dem Rahmen angelenkten, ausschwenkbaren und in einer ausgeschwenkten Stellung einen Innenraum der Erweiterungsvorrichtung (11) begrenzenden Wandplatten (12a-d), Verbindungselementen (13, 13a), die jeweils an zwei ihrer Ränder an benachbarte Wandplatten (12a-d) angelenkt sind, **dadurch gekennzeichnet, dass** die Erweiterungsvorrichtung erste Erweiterungselemente (14a-d) aufweist, die an eine Kante der Wandplatten (12a-d) angelenkt und zwischen einer an den Wandplatten (12a-d) anliegenden und einer die Wandplatten (12a-d) verlängernden Stellung schwenkbar sind, wobei in der die Wandplatten (12a-d) verlängernden Stellung flexible Membranelemente (16) zwischen den ersten Erweiterungselementen (14a-d) gespannt sind, die durch jeweils wenigstens ein Zugelement (36) dehnfest verstärkt sind.

2. Erweiterungsvorrichtung nach Anspruch 1, **dadurch gekennzeichnet, dass** in der ausgeschwenkten Stellung die Wandplatten (12a-d) unter wenigstens 30° gegen die Horizontale geneigt sind.

3. Erweiterungsvorrichtung nach Anspruch 1 oder 2, **dadurch gekennzeichnet, dass** wenigstens eines der Membranelemente (16) durch wenigstens ein als Seil ausgebildetes Zugelement (36), das sich entlang einer oberen Kante (35) des Membranelements (16) erstreckt, verstärkt ist.

4. Erweiterungsvorrichtung nach Anspruch 3, **dadurch gekennzeichnet, dass** Enden des Seils (35) des Membranelements (16) an benachbarten Erweiterungselementen (14a-d, 15) befestigt sind.

5. Erweiterungsvorrichtung nach Anspruch 3 oder 4, **dadurch gekennzeichnet, dass** das Seil (35) von einem Membranzuschnitt (28) des Membranelements (16) umschlungen ist.

6. Erweiterungsvorrichtung nach einem der vorhergehenden Ansprüche, **dadurch gekennzeichnet, dass** zweite Erweiterungselemente (15) an eine obere Kante der Verbindungselemente (13, 13a) angelenkt und mit einem jeweils benachbarten ersten Erweiterungselement (14a-d) über eines der flexiblen Membranelemente (16) verbunden sind.

7. Erweiterungsvorrichtung nach einem der vorhergehenden Ansprüche, **dadurch gekennzeichnet, dass** die zweiten Erweiterungselemente (15) durch Federn in eine an den Verbindungselementen (13) anliegende Stellung beaufschlagt sind.

8. Erweiterungsvorrichtung nach einem der vorhergehenden Ansprüche, **gekennzeichnet durch** wenigstens ein Stellglied (20a-20d), das an einem der ersten Erweiterungselemente (14a-14d) angreift, um eine Schwenkbewegung des ersten Erweiterungselements (14a-14d) aus der an der es tragenden Wandplatte (12a-12d) anliegenden Stellung in die die Wandplatte (12a-12d) verlängernde Stellung anzutreiben.

9. Erweiterungsvorrichtung nach Anspruch 9, **dadurch gekennzeichnet, dass** das Stellglied (20a-20d) an der das erste Erweiterungselement (14a-14d) tragenden Wandplatte (12a-12d) montiert ist.

10. Erweiterungsvorrichtung nach Anspruch 10, **dadurch gekennzeichnet, dass** das Stellglied (20a) an einer dem Innenraum zugewandten Innenseite der Wandplatte (12a) jenseits eines die Wandplatte (12a) mit einer Verbindungsplatte (13a) verbindenden Gelenks (19) angeordnet ist.

11. Erweiterungsvorrichtung nach Anspruch 10, **dadurch gekennzeichnet, dass** das Stellglied (20c) an einer Außenseite der Wandplatte (12c) angeordnet ist.

12. Erweiterungsvorrichtung nach einem der Ansprüche 1 bis 12, **dadurch gekennzeichnet, dass** wenigstens eines der Membranelemente (16) mit einem benachbarten Erweiterungselement (14a-14d, 15) durch ein Stangenscharnier (32) verbunden ist.

13. Erweiterungsvorrichtung nach einem der Ansprüche 1 bis 12, **dadurch gekennzeichnet, dass** wenigstens eines der Membranelemente (16) an einem benachbarten Erweiterungselement (14a-14d, 15) flächig anliegend befestigt ist.

## Claims

1. An expansion apparatus for a bulk material container comprising a frame, a plurality of wall panels (12a-d) which are pivotably connected to the frame and which are pivotable outwardly and in an outwardly pivoted position define an internal space of the expansion apparatus (11), connecting elements (13, 13a) which are respectively pivotably connected at two of their edges to adjacent wall panels (12a-d), **characterised in that** the expansion apparatus has first expansion elements (14a-d) which are pivotably connected to an edge of the wall panels (12a-d) and are pivotable between a position of bearing against the wall panels (12a-d) and a position of extending the wall panels (12a-d), wherein in the position of extending the wall panels (12a-d) flexible membrane elements (16) are stretched between the first expansion elements (14a-d), which are stretch-resistantly reinforced by at least one respective tensile element (36).

2. An expansion apparatus according to claim 1 **characterised in that** in the outwardly pivoted position the wall panels (12a-d) are inclined at at least 30° with respect to the horizontal.

3. An expansion apparatus according to claim 1 or claim 2 **characterised in that** at least one of membrane elements (16) is reinforced by at least one tensile element (36) which is in the form of a cable and which extends along an upper edge (35) of the membrane element (16).

4. An expansion apparatus according to claim 3 **characterised in that** ends of the cable (35) of the membrane element (16) are fixed to adjacent expansion elements (14a-d, 15).

5. An expansion apparatus according to claim 3 or claim 4 **characterised in that** the cable (35) is wrapped by a tailored membrane portion (28) of the membrane element (16).

6. An expansion apparatus according to one of the preceding claims **characterised in that** second expansion elements (15) are pivotably connected to an upper edge of the connecting elements (13, 13a) and are connected to a respective adjacent first expansion element (14a-d) by way of one of the flexible membrane elements (16).

7. An expansion apparatus according to one of the preceding claims **characterised in that** the second expansion elements (11) are urged by springs into a position of bearing against the connecting elements (13).

8. An expansion apparatus according to one of the preceding claims **characterised by** at least one actuating member (20a-20d) which engages one of the first expansion elements (14a-14d) to drive a pivotal movement of the first expansion element (14a-14d) out of the position of bearing against the wall panel (12a-12d) carrying it into the position of extending the wall panel (12a-12d).

9. An expansion apparatus according to claim 8 **characterised in that** the actuating member (20a-d) is mounted at the wall panel (12a-12d) carrying the first expansion element (14a-14d).

10. An expansion apparatus according to claim 9 **characterised in that** the actuating member (20a) is arranged at an inward side of the wall panel (12a), that is towards the internal space, beyond a joint (19) connecting the wall panel (12a) to a connecting panel (13a).

11. An expansion apparatus according to claim 10 **characterised in that** the actuating member (20c) is arranged at an outside of the wall panel (12c).

12. An expansion apparatus according to one of claims 1 to 11 **characterised in that** at least one of the membrane elements (16) is connected to an adjacent expansion element (14a-14d, 15) by a continuous hinge (32).

13. An expansion apparatus according to one of claims 1 to 12 **characterised in that** at least one of the membrane elements (16) is fixed in a condition of bearing flat against an adjacent expansion element (14a-14d, 15).

## Revendications

1. Dispositif d'élargissement pour un réservoir de produit en vrac, comprenant un châssis, une pluralité de panneaux de paroi (12a-d) articulés sur le châssis, déployables et délimitant un espace intérieur du dispositif d'élargissement (11), des éléments de liaison (13, 13a) qui sont chacun articulés sur des panneaux de paroi (12ad) au niveau de deux de leurs bords, **caractérisé en ce que** le dispositif d'élargissement comporte des premiers éléments d'élargissement (14a-d) qui sont articulés sur une rive des panneaux de paroi (12a-d) et sont pivotants entre une position appliquée contre les panneaux de paroi (12a-d) et une position prolongeant les panneaux de paroi (12a-d), entre les premiers éléments d'élargissement (14a-d) étant tendus, dans la position prolongeant les panneaux de paroi (12ad), des éléments de membrane souples (16) qui sont chacun renforcés en extension par au moins un élément de traction (36).

2. Dispositif d'élargissement selon la revendication 1, **caractérisé en ce que**, dans la position déployée, les panneaux de paroi (12a-d) sont inclinés d'au moins 30° par rapport à l'horizontale.

3. Dispositif d'élargissement selon la revendication 1 ou 2, **caractérisé en ce qu'**au moins un des éléments de membrane (16) est renforcé par au moins un élément de traction (36) qui est conformé en câble et qui s'étend le long d'une rive supérieure (35) de l'élément de membrane (16).

4. Dispositif d'élargissement selon la revendication 3, **caractérisé en ce que** des extrémités du câble (35) de l'élément de membrane (16) sont fixées à des éléments d'élargissement (14a-d, 15) voisins.

5. Dispositif d'élargissement selon la revendication 3 ou 4, **caractérisé en ce que** le câble (35) est entouré par une portion de membrane (28) de l'élément de membrane (16).

6. Dispositif d'élargissement selon une des revendications précédentes, **caractérisé en ce que** des seconds éléments d'élargissement (15) sont articulés sur une rive supérieure des éléments de liaison (13, 13a) et reliés chacun à un premier élément d'élargissement (14a-d) voisin par l'intermédiaire d'un des éléments de membrane souples (16).

7. Dispositif d'élargissement selon une des revendications précédentes, **caractérisé en ce que** les seconds éléments d'élargissement (15) sont sollicités par des ressorts vers une position appliquée contre les éléments de liaison (13).

8. Dispositif d'élargissement selon une des revendications précédentes, **caractérisé par** au moins un actionneur (20a-20d) qui agit sur un des premiers éléments d'élargissement (14a-14d) pour commander un mouvement de basculement des premiers éléments d'élargissement (14a-14d) de la position appliquée contre le panneau de paroi (12a-12d) vers la position prolongeant le panneau de paroi (12a-12d).

9. Dispositif d'élargissement selon la revendication 9, **caractérisé en ce que** l'actionneur (20a-20d) est monté sur le panneau de paroi (12a-12d) portant le premier élément d'élargissement (14a-14d) .

10. Dispositif d'élargissement selon la revendication 10, **caractérisé en ce que** l'actionneur (20a) est disposé sur un côté intérieur, tourné vers l'espace intérieur, du panneau de paroi (12a) au-delà d'une articulation (19) reliant le panneau de paroi (12a) à un panneau de liaison (13a).

11. Dispositif d'élargissement selon la revendication 10, **caractérisé en ce que** l'actionneur (20c) est disposé sur un côté extérieur du panneau de paroi (12c).

12. Dispositif d'élargissement selon une des revendications 1 à 12, **caractérisé en ce qu'**au moins un des éléments de membrane (16) est relié à un élément d'élargissement (14a-14d, 15) voisin par l'intermédiaire d'une charnière piano (32).

13. Dispositif d'élargissement selon une des revendications 1 à 12, **caractérisé en ce qu'**au moins un des éléments de membrane (16) est fixé en étant appliqué à plat contre un élément d'élargissement (14a-14d, 15) voisin.
